# EUROPÄISCHE PATENTSCHRIFT

(11) **EP 4 103 393 B1**
(45) Veröffentlichungstag und Bekanntmachung des Hinweises auf die Patenterteilung: **01.01.2025**
(21) Anmeldenummer: 21705876.7
(22) Anmeldetag: 08.02.2021
(51) Int. Cl.: B29C 70/54, B29C 45/14, B29C 70/20

(54) **VERFAHREN ZUM HERSTELLEN VON FASERVERSTÄRKTEN KUNSTSTOFFTEILEN, FIXIERUNG MITTELS DOPPESLSEITIGER KEBESCHICHT**
PROCESS FOR MANUFACTURING A FIBER REINFOIRCED PLASTIC PART, FIXATION BY DOUBELSIDED ADHESIVE LAYER
PROCÉDÉ DE FABRICATION UN COMPOSANT PLASTIQUE EN MATIÈRE RENFORCÉ À FIBRES, FIXATION AVED UN COUCHE ADHÉSIVE EN DEUX FACE

(30) Priorität: 13.02.2020 DE 202020100778 U
(43) Veröffentlichungstag der Anmeldung: 21.12.2022
(73) Patentinhaber: BRZESKI, Markus, 67685 Weilerbach (DE)
(72) Erfinder: BRZESKI, Markus, 67685 Weilerbach (DE)
(74) Vertreter: Patentanwaltskanzlei Vièl & Wieske PartGmbB
(86) Internationale Anmeldenummer: PCT/DE2021/100118
(87) Internationale Veröffentlichungsnummer: WO 2021/160215

(56) Entgegenhaltungen:
- EP-A1- 2 803 475
- EP-A1- 3 078 475
- EP-A1- 3 553 144
- DE-A1- 102015 208 320
- DE-B3- 102008 031 814
- JP-A- H04 216 023
- US-A1- 2010 089 527
- US-A1- 2015 293 558
- US-A1- 2016 167 267
- US-A1- 2017 174 951
- US-A1- 2017 320 275

## Beschreibung

Die Erfindung betrifft ein Verfahren zum Herstellen von faserverstärkten Kunststoffteilen in einer Form. Sie betrifft weiterhin die Verwendung einer Klebeschicht zur Durchführung des Verfahrens.

Auf aktuellem Stand der Technik werden sehr zahlreiche Formteile aus verflüssigtem Kunststoff in einer Form hergestellt, beispielsweise im Spritzguss-, Fließpress- oder Thermoformverfahren. Um den Kunststoff möglichst gleichmäßig, ohne Verspannungen und mit vorhersehbaren Schrumpfungen abzukühlen, ist vorzugsweise über die gesamte Fläche des Kunststoffteils hinweg die Wandstärke konstruktiv möglichst gleichbleibend zu gestalten. Für statisch oder durch die Funktion besonders belastete Bereiche des Formteils ist anstelle von den gusstechnisch nachteiligen Wandverdickungen als Verstärkung das Eingießen von reißfesten Fasern zu bevorzugen, um die Maßhaltigkeit des Endproduktes zu verbessern und die Produktionskosten zu reduzieren.

Das Hantieren der Fasern wird dadurch vereinfacht, dass sie als Vorprodukt in einer separaten Maschine gebündelt und durch Umgießen mit Kunststoff zu einem flexiblen Band geformt werden. Dieses faserverstärkte Kunststoffband wird dann segmentweise in der Form an der richtigen Stelle fixiert. Beim Einpressen von flüssigem Kunststoff in die Form wird das Band auf allen seinen in die Form hinein weisenden Flächen mit dem flüssigen Kunststoff bedeckt, wodurch es in das entstehende Formteil mit eingegossen ist und innerhalb dessen Wandung glattflächig integriert ist.

Aus der EP 3 078 475 A1 ist ein Verfahren zum Herstellen eines mit mindestens einem Verstärkungselement verstärkten Formkörpers mittels Spritzgießen bekannt, wobei das Verstärkungselement stoffschlüssig mit dem Spritzgusswerkzeug verbunden wird, so dass beim anschließenden Spritzgießen das

Verstärkungselement im Werkzeug fixiert ist. Das Verfahren weist die folgenden Schritte auf:
- Imprägnierung eines endlosen, flachen Rovings mit einer Schmelze eines ersten thermoplastischen Polymers zu einem Faserbändchen,
- Bereichsweise Aufbringung mindestens eines Klebemittels auf dem Faserbändchen mit anschließendem Schmelzen des mindestens einen Klebemittels,
- Erkalten und Aushärten des Faserbändchens,
- Aufheizen des Spritzgusswerkzeugs auf eine Temperatur, die nicht niedriger als 20 K unterhalb des Schmelzpunktes des Klebemittels liegt,
- Einbringen des mindestens einen Faserbändchens in das Spritzgusswerkzeug, wobei zumindest ein Teil der mit Klebemittel beschichteten Bereiche des Faserbändchens mit mindestens einer temperierten Spritzgusswerkzeugwand in Kontakt gebracht werden,
- Spritzgießen eines zweiten thermoplastischen Polymers in das Werkzeug,
- Entnahme des mit mindestens einem Faserbändchen verstärkten Formkörpers aus der Spritzgussform.

Um die Segmente des Bandes innerhalb einer Spritzgussform zu fixieren, beschreibt die DE 100 12 378 C2, dass ein mit Kohlefasern verstärktes Kunststoffband in gewünschter Länge von einer Rolle abgewickelt wird und das so freigewordene, erste Ende von einem Roboterarm an die gewünschte Position innerhalb der Spritzgussform positioniert, von einer Andruckrolle an die Spritzgussform angedrückt und dann abgeschnitten wird. An das zweite Ende der eingegossenen und elektrisch leitenden Kohlefaser wird ein elektrischer Hochspannungsgenerator angeschlossen. Der andere Pol des Hochspannungsgenerators wird mit der elektrisch leitenden Spritzgussform verbunden. Die hohe elektrische Spannungsdifferenz im Kilovoltbereich zwischen Spritzgussform und kohlefaserverstärktem Kunststoffband lädt den Kunststoff des Bandes elektrostatisch auf, wodurch er an der Oberfläche der Spritzgussform haftet.

Diese Vorgehensweise hat den Nachteil, dass elektrisch leitende Fasern oder ein elektrisch leitendes Polymer für das Band erforderlich sind. Elektrisch nicht leitfähige Fasern oder Kunststoffe sind nicht verwendbar.

Ein weiterer Nachteil sind die aufwendigen elektrischen Isolationen wesentlicher Baugruppen des Roboters gegen seine übrigen Komponenten. Nachteilig ist auch die erforderliche elektrische Isolation der Oberfläche der Spritzgussform, wofür dieses teure Bauteil sehr aufwändig beschichtet werden muss. Insbesondere für Kleinserien und Einzelstücke ist das Verfahren gemäß DE 100 12 378 C2 nur mit unangemessen hohem Aufwand verwendbar.

Als Alternative zur vorgenannten elektrostatischen Fixierung der Segmente beschreibt Karl Steiner in seiner Dissertation 1995, Universität Kaiserslautern. VDI Fortschritt-Berichte, Reihe 2/Nr. 369, Düsseldorf: VDI-Verlag, 1995, unter dem Titel "Einsatz einer robotergesteuerten Anlage zum Bandablegen von thermoplastischen Verbundwerkstoffen" das Aufkleben der Segmente von faserverstärkten Kunststoffbändern in Spritzgussformen. Dazu benutzte er sogenannte "doppelseitige Klebebänder", an die er die Segmente anhaften ließ.

Als Nachteil nennt die DE 100 12 378 C2 im Jahr 2000, dass das Aufbringen von Klebstoffen und Klebebändern die Oberfläche des Spritzgussteils verunreinigen könne. Diese Materialanhaftungen beinträchtigen z.B. eine anschließende Lackierung der Oberfläche.

Für das Aufbringen einer Klebeschicht ohne störende Verunreinigung sind auf aktuellem Stand der Technik die doppelseitigen Klebebänder bekannt, die aus einer Klebeschicht auf einer Trägerfolie bestehen. Sie werden - meist von einem Wickel - abgerollt und dann durch Druck auf die Trägerfolie auf die gewünschte Stelle aufgebracht. Anschließend wird in einem zweiten Arbeitsschritt die Trägerfolie von der Klebeschicht abgezogen.

Der wesentliche Nachteil dieser Vorgehensweise ist der erhebliche Aufwand an Arbeitszeit und Vorrichtungen bei der Einbringung der Klebeschicht und der Trägerfolie, bei der Entfernung der Trägerfolie vor dem Spritzguss und bei der Entfernung der Klebeschicht nach dem Guss.

Nachteilig sind auch der Materialaufwand für die Trägerfolie und die Klebeschicht, sowie der Zeitaufwand und die Kosten für die Entsorgung dieser Hilfsmaterialien.

Die DE 10 2008 031 814 B3 beschreibt ein Verfahren zum Herstellen von mindestens einem Bauteil, bei dem vorgesehen ist, dass an einer Innenwandung einer Werkzeughälfte eines Formwerkzeugs ein Klebemittel angeordnet wird, dass eine Folie über dieses Klebemittel an der Innenwandung fixiert wird, und dass die fixierte Folie an einer der Innenwandung abgewandten Seite hinterspritzt und somit das mindestens eine Bauteil hergestellt wird, wobei das mindestens eine derart hergestellte Bauteil von der Innenwandung bei gleichzeitigem Lösen der Folie von dem Klebemittel entfernt wird.

Aus der JP H04 216023 A ist das Fixieren eines flexiblen Einlegegewebes mittels einer doppelseitigen Kiebeschicht bekannt.

Auf diesem Hintergrund hat sich die Erfindung die Aufgabe gestellt, die vorgenannten Nachteile einzuschränken und für Kunststoffteile, die in einer Form, insbesondere im Spritzgieß-, Fließpress- oder Thermoformverfahren, hergestellt und partiell durch eingegossene Fasern in ihrer mechanischen Belastbarkeit verstärkt werden sollen, ein einfaches, universell verwendbares sowie Arbeitszeit und Materialkosten sparendes Verfahren zu entwickeln, das für neue ebenso wie für bestehende Anlagen geeignet ist und bei dem Segmente von faserverstärkten Kunststoffbändern als Halbzeug an der Innenwand der Form in der korrekten Position flächig haften, wobei diese Haftung so belastbar ist, dass sie sich während des Gussvorganges nicht oder nur geringfügig verändert und sich das Kunststoffband mit dem flüssigem Kunststoff haftend verbindet.

Diese Aufgabe wird erfindungsgemäß dadurch gelöst, dass die Klebeschicht allseits vom Rand des Segmentes beabstandet ist und die Haftungskraft der Klebeschicht auf der Form größer ist als die Haftungskraft der Klebeschicht auf dem Segment, sodass die Klebeschicht nach dem Abheben eines ersten Segmentes vollständig in der Form verbleibt und nach der Erhöhung der Temperatur der Klebeschicht durch den Kontakt mit einer geschmolzenen Kunststoffmatrix die verbliebene Haftungskraft der Klebeschicht für das Anhaften wenigstens eines zweiten Segmentes ausreichend ist.

Es ist also die Kernidee der Erfindung, die mit relativ viel Aufwand in die Form eingebrachte Klebeschicht, die dann auch noch mit weiterem Aufwand aus der Form entnommen und entsorgt werden muss, nicht nur für einen einzigen Klebevorgang zu verwenden, sondern mehrfach.

Unter mehrfach wird hierbei eine 3-fache, 5-fache, 10-fache, 50-fache, 100-fache, vorzugsweise mehrhundertfache, insbesondere 150-fache, 200-fache, 300-fache oder 400-fache, Verwendung verstanden. Zwar wird durch das erfindungsgemäße Prinzip der Aufwand für die Beschaffung der Klebeschicht, deren Einbringung in die Form, der Entnahme und der Entsorgung nicht verändert. Aber durch die Aufteilung auf zahlreiche Herstellungsvorgänge sinkt der Anteil des Gesamtaufwandes an jedem einzelnen Herstellungsvorgang dramatisch.

Für das erfinderische Prinzip der Fixierung der Segmente in der Form durch Ankleben ist es nicht relevant, wie die Klebeschicht auf die Oberfläche der Form aufgebracht wird. Wenn sich der Klebstoff überhaupt nicht mit dem eingebrachten Kunststoff verbindet, sondern nur mit dem Kunststoff der Segmente des flexiblen Bandes aus Faser-Kunststoff-Verbundwerkstoffes, dann kann er auch außerhalb der mit den Segmenten abzudeckenden Bereiche der Form aufgetragen werden, z.B. durch Spritzen oder Sprühen. In diesem Fall verunreinigt der Klebstoff das Werkstück nicht chemisch. Wenn die Klebeschicht nur wenige Mikrometer stark ist, dann ist auch die Geometrie der Oberfläche des Werkstückes in der Praxis nicht nennenswert beeinflusst. Aber wenn der eingespritzte Kunststoff chemisch mit der Klebstoffschicht reagiert, dann müssen Klebstoff und Kunststoff voneinander getrennt bleiben.

Die Klebeschicht ist vom Rand des Segmentes beabstandet. Dadurch wird die Front des Schwalles aus flüssigem Kunststoff, die in die Form einströmt, den auf der Form direkt aufliegenden Randbereich des Segmentes nicht mehr anheben. Folglich schiebt sich der flüssige Kunststoff nicht zwischen Segment und Form und kommt deshalb auch nicht mit der Klebeschicht in Berührung.

Zu den Vorzügen des erfindungsgemäßen Verfahrens zählt, dass - im Unterschied zum elektrostatischen Fixieren der Segmente - die Grenzwerte von 25 µm für die Oberflächenrauigkeit und 1 mm pro 10 cm für die Welligkeit, die beim elektrostatischen Anheften nicht überschritten werden sollten, beim Fixieren durch eine Klebeschicht überschritten werden können.

Eine Weiterbildung der Erfindung besteht darin, dass sich die zugehörige Klebeschicht vor dem Einbringen in die Form auf einer Trägerfolie befindet, wobei die Klebekraft der Klebeschicht auf dieser Trägerfolie so gering ist, dass die Trägerfolie zwar während des Einbringens als mechanischer Träger für die Klebeschicht nutzbar ist, aber danach von der Klebeschicht abgezogen wird und dabei die Klebeschicht wenigstens zum größeren Teil in der Form verbleibt.

Für diese Fälle kann eine Trägerfolie in genau derselben Form wie das Segment mit der Klebeschicht beaufschlagt und an genau die Stelle der Form angedrückt werden, an die danach die Segmente angeklebt werden sollen. Wenn die Haftungskraft der Klebeschicht auf der Trägerfolie geringer ist als auf der Form, so kann die Trägerfolie nach dem Einlegen und Andrücken entnommen und entsorgt oder wiederverwendet werden. Die Klebstoffschicht verbleibt dann alleine auf der Oberfläche der Form. Zu beachten ist, dass das spätere Einlegen der Segmente relativ sehr genau sein muss, damit kein Teil der Klebstoffschicht mit dem eingespritzten Kunststoff reagiert.

Alternativ ist es möglich, dass sich die zugehörige Klebeschicht schon vor dem Einbringen in die Form auf dem Segment befindet.

In dieser alternativen Ausführungsform wird ein Segment schon vor dem Einlegen mit einer Klebeschicht versehen.

Diese Klebeschicht kann in einer weiteren Ausführungsvariante als Transportschutz mit einer Schutzfolie abgedeckt werden, die vor dem Aufkleben entfernt werden muss. Wenn dann das beschichtete Segment in die Form eingelegt und daran angedrückt wird, so befinden sich Klebeschicht und Segment an genau der gleichen Stelle in der Form.

Wenn dieses erste Segment in flüssigen Kunststoff eingegossen und mit dem fertigen Formteil aus der Form entnommen wird, so bleibt erfindungsgemäß die Klebeschicht in der Form zurück. Wenn auf dieser Klebeschicht ein nächstes, dann ein übernächstes und viele weitere Segmente in Folge angeklebt werden, so müssen sie recht genau positioniert werden, wenn stets die Klebeschicht vollständig vom Segment abgedeckt werden soll.

Die erforderliche Positionierungsgenauigkeit kann dadurch reduziert werden, dass die Klebeschicht nur einen Teil der Fläche des Segmentes bedeckt. Zu beachten ist, dass dann die jeweilige Haftungskraft noch ausreichen muss.

Im Normalfall sinkt die Haftungskraft der Klebeschicht mit jeder weiteren Verwendung ab. Wenn die Segmente nicht mehr gehalten werden können und/ oder während des Einspritzens verschoben werden, so muss die alte Klebeschicht entweder mit einer frischen zweiten Klebeschicht überzogen werden, sofern die entstehende DoppelSchicht den Anforderungen genügt oder die gealterte Klebeschicht muss entfernt werden. Zum Ablösen des Klebstoffes von der Form können eine Behandlung mit Chemikalien, ein Abbrennen, Abziehen, Abschaben, Schmelzen und Abwischen oder Absaugen genutzt werden oder ein Tape, an dem der Klebstoff besser haftet als an der Form.

Alternativ kann in die Form eine Reinigungsmasse (z.B. Kunststoff) eingespritzt werden. Dazu muss die Klebeschicht nach dem Abheben des letzten Segmentes eine Haftungskraft zur Reinigungsmasse aufbauen, die höher ist als die Haftungskraft zwischen der Klebeschicht und der Form. Dann wird die Reinigungsmasse zusammen mit dem Klebstoff als Ganzes aus der Form entnommen.

Erfindungsgemäß ist auch die Verwendung einer Klebeschicht zur Durchführung des erfindungsgemäßen Verfahrens, wobei die Klebeschicht aus zwei Klebeschichten mit unterschiedlicher Haftkraft besteht, wobei die dem Segment zugewandte Klebeschicht eine geringere Haftkraft hat als die der Form zugewandte Klebeschicht und zwischen den beiden Klebeschichten eine Trennfolie angeordnet ist, die die Trennung der beiden Klebeschichten ermöglicht.

Im Rahmen der Erfindung ist vorgesehen, dass die Klebeschichten aus der Gruppe der Polymerisations-, Polyadditions- und Polykondensationsklebstoffe, lösungsmittelhaltigen Klebstoffe, Dispersionsklebstoffe, Schmelzklebstoffe, Kontaktklebstoffe und Plastisole, und bevorzugt aus der Gruppe der dauerklebrigen Schmelzklebstoffe ausgewählt sind.

Es ist ein wesentlicher Vorteil des erfinderischen Prinzips, zur Verstärkung der Spritzgussteile standardmäßig als Halbzeug in gigantischen Längen produzierte, faserverstärkte Kunststoffbänder zu verwenden. Wenn diese Bänder relativ schmal sind, können durch das Zusammensetzen von mehreren kleineren Segmenten auch komplex geformte Verstärkungen verwirklicht werden.

Es werden bevorzugt Segmente mit einer Stärke von bis zu 5 mm senkrecht zur Form eingearbeitet. Die Bandsegmente können soweit verzogen und/oder gekrümmt sein, dass die Größe der verbleibenden Kontaktflächen zur Form noch eine ausreichende Haftungskraft sicherstellt. Eine verbesserte Integration in das Kunststoffteil wird durch eine Fase am Rand von 10 bis 70° oder einen Radius an der Kante unterstützt.

Es ist das Verdienst dieser Erfindung, das seit langem bekannte Prinzip der Klebung so zu definieren, dass auch bei mehrfacher Verwendung der Klebeschicht die Haftung der Bandsegmente am Spritzgusswerkzeug so groß ist, dass sie im Spritzgussprozess gar nicht oder maximal nur um eine definierte Abweichung verrutschen und im Endprodukt exakt positioniert werden und dabei auch optimal mit dem Spritzgussprodukt verbunden sind. Diese Verbindung ist dadurch ausgezeichnet, dass die Oberfläche des Endprodukts so glatt ist, dass keine Kante zum Segment spürbar ist und es keinen Verzug gibt. Die Bandsegmente können kaum mehr vom Endprodukt gelöst werden.

Im Folgenden sollen weitere Einzelheiten und Merkmale der Erfindung anhand eines Ausführungsbeispiels näher erläutert werden. Dieses soll die Erfindung jedoch nicht einschränken, sondern nur erläutern. Es zeigt in schematischer Darstellung:
- Figur 1: ein Ausschnitt einer Spritzgussform mit darin eingeklebten Segmenten eines flexiblen Bandes aus Faser- Kunststoff-Verbundwerkstoff
- Figur 2: ein gekrümmtes Segment mit Klebeschicht und Schutzfolie

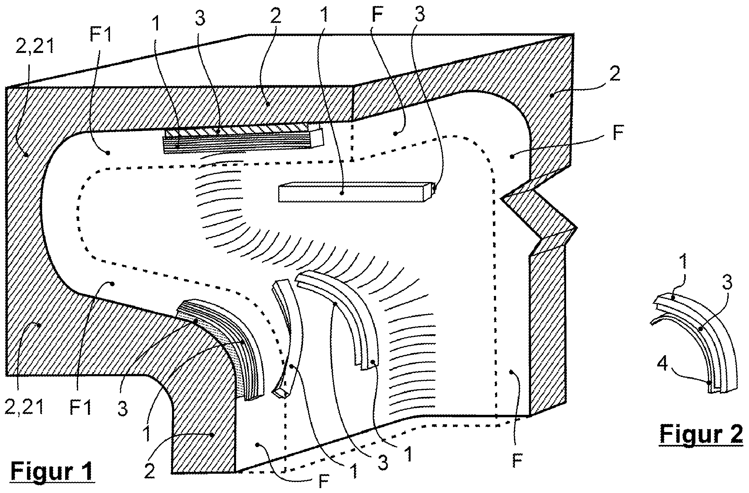

In Figur 1 ist als perspektivischer Ausschnitt das Eckteil einer Spritzgussform 2 dargestellt, die zur Herstellung eines - gestrichelt - eingezeichneten Formteiles F dient. Dieses Formteil F ist an der dargestellten Ecke mit einer kurzen, sich waagerecht und nach links erstreckenden Tragsäule F1 versehen, die in der Mulde 21 der Spritzgussform 2 geformt wird. Von der Mulde 21 ist in Figur 1 der konkav gewölbte Übergang zur Rückwand der Spritzgussform 2 durch eine Schraffur dargestellt.

Wenn auf das ganz links dargestellte Ende der Tragsäule F1 Kräfte einwirken, die quer zur Längsachse ausgerichtet sind, so wird die Tragsäule F1 an ihren Übergangsstellen zum übrigen Bereich des Formteils F besonders belastet. Um in dieser kritischen Verbindungszone der Tragsäule F1 mit dem übrigen Formteil F ein Reißen des Kunststoffmaterials zu vermeiden, werden in diesem Ausführungsbeispiel fünf Segmente 1 eines flexiblen Bandes aus Faser-Kunststoff-Verbundwerkstoff mit eingegossen.

Davon sind die beiden links zu sehenden Segmente 1 zeichnerisch geschnitten, so dass die darin etwa in Längsrichtung des Segmentes 1 verlaufenden Fasern sichtbar werden. Ebenfalls zeichnerisch geschnitten sind die jeweiligen Klebeschichten 3, die die beiden Segmente 1 auf der Innenfläche der Spritzgussform 2 fixieren.

In Figur 1 ist gut nachvollziehbar, dass vor dem Guss des Formteiles F die Segmente 1 mit ausreichender Haftungskraft an der Innenfläche der Spritzgussform 2 fixiert werden müssen. Die Haftungskraft muss nicht nur dafür ausreichen, dass die Segmente 1 mit der gebotenen Genauigkeit in der erforderlichen Position verbleiben, sondern dabei auch möglichst großflächig an der Oberfläche der Spritzgussform 2 haften, insbesondere in gekrümmten Bereichen, damit sie dem Schwall aus der Welle des eingespritzten flüssigen Kunststoffes für das Formteil F standhalten.

Zu diesen Zwecken sichern Klebeschichten 3 die Haftung der Segmente 1 an der Spritzgussform 2. Sie sind in Figur 1 mit einer sehr großen Materialstärke eingezeichnet, damit sie erkennbar sind. In der Praxis werden sie jedoch nur ein Film sein, der so dünn ist, dass er kaum als separate Schicht erkennbar ist, also auch keine Kerbe in der Oberfläche des Formteils F hinterlässt. Beide Klebeschichten 3 bestehen aus dauerklebrigen Schmelzklebstoffen mit unterschiedlicher Haftkraft, wobei die dem Segment 1 zugewandte Klebeschicht eine geringere Haftkraft hat als die der Spritzgussform 2 zugewandte Klebeschicht. Bei ersterer handelt es sich beispielsweise um eine Klebeschicht auf Grundlage von thermoplastischem Kautschuk, bei zweiter um einen Klebstoff aus synthetischem Kautschuk. Die dafür erforderliche Konfiguration des Werkstoffes der Klebeschichten ist auf aktuellem Stand der Technik erfolgt anhand von Katalogen und technischen Daten der Klebstoffhersteller in Abhängigkeit von den Materialien der Spritzgussform, dem Kunststoff des faserverstärkten Segmentes sowie unter Berücksichtigung der gewählten maximalen Temperatur für den Verarbeitungsvorgang.

In Figur 1 ist gut zu erkennen, dass die Segmente 1 auf ebenen Teilen der Spritzgussform 2 ebenso gut fixiert werden können, wie auf gewölbten Teilen. Insbesondere können die flexiblen Segmente 1 auch in sich verdreht angeordnet werden. Durch die Applikation von mehreren, benachbarten Segmenten 1 können größere Verstärkungen des Formteils F gebildet werden.

In Figur 2 ist ein Segment 1 dargestellt, dass bereits so gekrümmt ist, wie es für die Aufbringung auf einer konvexen Wölbung der Spritzgussform 2 erforderlich ist. Es ist an seiner zur Spritzgussform 2 weisenden Seite mit einer Klebeschicht 3 versehen. Damit diese nicht vor dem Aufkleben berührt und dadurch unbrauchbar wird, ist sie mit einer Schutzfolie 4 abgedeckt. In Figur 2 ist der Zustand kurz vor dem Einbringen des Segmentes 1 in die Spritzgussform 2 gezeigt, bei dem damit begonnen wird, die Schutzfolie 4 abzuziehen.

Für praktische Versuche wurde in eine Spritzgussform aus Werkzeugstahl mit einer synthetischem Kautschuk Beschichtung der Oberfläche als Klebeschicht eine Matrix aus Polypropylen mit einer Materialstärke von 0,2 mm eingebracht. Ein Segment eines Kunststoffbandes aus PP, das mit zahlreichen Fasern aus Kohlenstoff verstärkt war, wurde in der Spritzgussform auf der Klebeschicht fixiert und in die Oberfläche eines Formteils aus glasfaserverstärktem Polypropylen eingespritzt. Vor dem ersten Spritzvorgang war die Haftungskraft zwischen der Klebeschicht und der Oberfläche der Spritzgussform um den Faktor 1,4 größer als die Haftungskraft zwischen der Klebeschicht und dem Segment. Nach dem ersten Spritzguss mit einer Temperatur von 235 Grad und der Entnahme des fertigen Formteils mitsamt dem daran angegossenen Segment blieb die Klebeschicht vollständig in der Spritzgussform zurück. Die Haftungskraft zwischen Klebeschicht und Spritzgussform sank danach ab, war aber immer noch um den Faktor 1,2 größer als die Haftungskraft zwischen der Klebeschicht und dem nächsten, in die Spritzgussform eingeklebten Segment.

Mit jedem weiteren Spritzguss und jedem weiteren, neu in die Spritzgussform eingeklebten Segment des Bandes aus Faser-Kunststoff-Verbundwerkstoff sanken die absoluten Werte der Haftungskräfte um 2 Prozent, aber die jeweilige Haftungskraft zwischen Spritzgussform und Klebeschicht war noch immer größer als die Haftungskraft zwischen Klebeschicht und Segment. Dabei war die letztgenannte Haftungskraft für insgesamt 75 Spritzvorgänge nicht nur ausreichend, um das jeweils neue Segment vor dem Spritzguss in der Form zu halten, sondern es auch während des Spritzgusses nicht verrutschen zu lassen. Für die 24 nächsten Spritzgussvorgänge wurde das aufgeklebte Segment nur um jeweils bis zu 1 mm, also etwa 8 Prozent der Breite des Bandes verschoben.

Nach bis zu 400 Spritzgussvorgängen reichte die Haftungskraft der Klebeschicht nicht mehr aus, um ein weiteres Segment in die Form einzukleben und es dort auch während des Spritzgusses definiert zu halten. Die Klebeschicht musste dann aus der Form entfernt werden.

### Bezugszeichenliste

- F: Formteil, wird durch Eingießen von Segmenten 1 in der Spritzgussform 2 verstärkt
- F1: Tragsäule am Formteil F
- 1: Segment eines flexiblen Bandes aus Faser-Kunststoff-Verbundwerkstoff
- 2: Spritzgussform für Formteil F
- 21: Mulde in der Spritzgussform 2 zur Formung der Tragsäule F1
- 3: Klebeschicht zwischen Spritzgussform 2 und Segment 1
- 4: Schutzfolie 4 auf Klebeschicht 3

## Patentansprüche

1. Verfahren zum Herstellen von faserverstärkten Kunststoffteilen in einer Form, wobei ein Segment (1) eines flexiblen Bandes aus Faser-Kunststoff-Verbundwerkstoff an der Oberfläche der Form (2) durch eine Klebeschicht (3) zwischen dem Segment (1) und der Form (2) fixiert wird,
wobei
die Klebeschicht (3) allseits vom Rand des Segmentes (1) beabstandet ist und die Haftungskraft der Klebeschicht (3) auf der Form (2) größer ist als die Haftungskraft der Klebeschicht (3) auf dem Segment (1), sodass die Klebeschicht (3) nach dem Abheben eines ersten Segmentes (1) vollständig in der Form (2) verbleibt
und nach der Erhöhung der Temperatur der Klebeschicht (3) durch den Kontakt mit einer geschmolzenen Kunststoffmatrix die verbliebene Haftungskraft der Klebeschicht (3) für das Anhaften wenigstens eines zweiten Segmentes (1) ausreichend ist.

2. Verfahren nach Anspruch 1, **dadurch gekennzeichnet, dass** sich die zugehörige Klebeschicht (3) vor dem Einbringen in die Form (2) auf einer Trägerfolie befindet, wobei die Klebekraft der Klebeschicht (3) auf dieser Trägerfolie so gering ist, dass die Trägerfolie zwar während des Einbringens als mechanischer Träger für die Klebeschicht (3) nutzbar ist, aber danach von der Klebeschicht (3) abgezogen wird und dabei die Klebeschicht (3) wenigstens zum größeren Teil in der Form (2) verbleibt.

3. Verfahren nach Anspruch 1, **dadurch gekennzeichnet, dass** sich die zugehörige Klebeschicht (3) schon vor dem Einbringen in die Form (2) auf dem Segment (1) befindet.

4. Verfahren nach Anspruch 3, **dadurch gekennzeichnet, dass** die zugehörige Klebeschicht vor dem Einbringen in die Form (2) durch eine Schutzfolie (4) abgedeckt ist.

5. Verfahren nach einem der vorhergehenden Ansprüche, **dadurch gekennzeichnet, dass** die zugehörige Klebeschicht (3) nur einen Teil der Fläche des Segmentes (1) bedeckt.

6. Verfahren nach einem der vorhergehenden Ansprüche, **dadurch gekennzeichnet, dass** die zugehörige Klebeschicht (3) nach dem Abheben des Segmentes (1) und nach dem Einspritzen einer Reinigungsmasse in die Form (2) eine Haftungskraft zur Reinigungsmasse aufbaut, die höher ist als die Haftungskraft zwischen der Klebeschicht (3) und der Form (2).

7. Verwendung einer Klebeschicht (3) zur Durchführung des Verfahrens gemäß den Ansprüchen 1 bis 6, **dadurch gekennzeichnet, dass** die Klebeschicht (3) aus zwei Klebeschichten mit unterschiedlicher Haftkraft besteht, wobei die dem Segment (1) zugewandte Klebeschicht eine geringere Haftkraft hat als die der Form (2) zugewandte Klebeschicht, wobei zwischen den beiden Klebeschichten eine Trennfolie angeordnet ist, die die Trennung der beiden Klebeschichten ermöglicht.

8. Verwendung gemäß Anspruch 7, **dadurch gekennzeichnet, dass** die Klebeschichten (3) aus der Gruppe der Polymerisations-, Polyadditions- und Polykondensationsklebstoffe, lösungsmittelhaltigen Klebstoffe, Dispersionsklebstoffe, Schmelzklebstoffe, Kontaktklebstoffe und Plastisole, und bevorzugt aus der Gruppe der dauerklebrigen Schmelzklebstoffe ausgewählt sind.

## Claims

1. A method for producing fiber-reinforced plastic parts in a mold, wherein a segment (1) of a flexible strip made of fiber-plastic composite material is fixed to the surface of the mold (2) by means of an adhesive layer (3) between the segment (1) and the mold (2), wherein the adhesive layer (3) is spaced apart from the edge of the segment (1) on all sides and the adhesive force of the adhesive layer (3) on the mold (2) is greater than the adhesive force of the adhesive layer (3) on the segment (1), so that, after a first segment (1) has been lifted off, the adhesive layer (3) remains completely in the mold (2) and after the temperature of the adhesive layer (3) has been increased through the contact with a melted plastic matrix, the remaining adhesive force of the adhesive layer (3) is sufficient for the adhesion of at least a second segment (1).

2. The method according to claim 1, **characterized in that**, prior to introduction into the mold (2), the associated adhesive layer (3) is located on a carrier foil, wherein the adhesive power of the adhesive layer (3) on this carrier foil is so low that the carrier foil can be used as a mechanical carrier for the adhesive layer (3) during introduction, but is then pulled off the adhesive layer (3), the adhesive layer (3) hereby remaining at least for the most part in the mold (2).

3. The method according to claim 1, **characterized in that** the associated adhesive layer (3) is already located on the segment (1) prior to introduction into the mold (2).

4. The method according to claim 3, **characterized in that** the associated adhesive layer is covered by a protective foil (4) prior to introduction into the mold (2).

5. The method according to any one of the preceding claims, **characterized in that** the associated adhesive layer (3) covers only part of the area of the segment (1).

6. The method according to any one of the preceding claims, **characterized in that**, after the segment (1) has been lifted off and after a cleaning compound has been injected into the mold (2), the associated adhesive layer (3) builds up an adhesive force to the cleaning compound that is higher than the adhesive force between the adhesive layer (3) and the mold (2).

7. Use of an adhesive layer (3) according to claims 1 to 6, **characterized in that** the adhesive layer (3) consists of two adhesive layers having differing adhesive forces, wherein the adhesive layer facing the segment (1) has a lower adhesive force than the adhesive layer facing the mold (2), wherein a separating foil is arranged between the two adhesive layers, said separating foil enabling the separation of the two adhesive layers.

8. Use according to claim 7, **characterized in that** the adhesive layers (3) are selected from the group of polymerization, polyaddition and polycondensation adhesives, solvent-containing adhesives, dispersion adhesives, hot-melt adhesives, contact adhesives and plastisols, and preferably from the group of permanently sticky hot-melt adhesives.

## Revendications

1. Procédé de fabrication de pièces en matière plastique renforcée par des fibres dans un moule, dans lequel un segment (1) d'une bande flexible en matériau composite fibres-plastique est fixé à la surface du moule (2) par une couche adhésive (3) entre le segment (1) et le moule (2), la couche adhésive (3) étant à distance de tous les côtés du bord du segment (1), et la force d'adhérence de la couche adhésive (3) sur le moule (2) étant supérieure à la force d'adhérence de la couche adhésive (3) sur le segment (1), de sorte que la couche adhésive (3) reste entièrement dans le moule (2) après enlèvement d'un premier segment (1), et qu'après l'augmentation de la température de la couche adhésive (3) par le contact avec une matrice plastique fondue, la force d'adhérence restante de la couche adhésive (3) est suffisante pour l'adhérence d'au moins un deuxième segment (1).

2. Procédé selon la revendication 1, **caractérisé en ce qu'**avant l'introduction dans le moule (2), la couche adhésive (3) concernée se trouve sur une feuille support, la force d'adhérence de la couche adhésive (3) sur cette feuille support étant si faible que la feuille de support peut certes être utilisée comme support mécanique pour la couche adhésive (3) pendant l'introduction, mais qu'elle est ensuite retirée de la couche adhésive (3), la couche adhésive (3) restant alors au moins en majeure partie dans le moule (2).

3. Procédé selon la revendication 1, **caractérisé en ce que** la couche adhésive (3) concernée se trouve déjà sur le segment (1) avant d'être introduite dans le moule (2).

4. Procédé selon la revendication 3, **caractérisé en ce que** la couche adhésive concernée est recouverte d'un film de protection (4) avant d'être introduite dans le moule (2).

5. Procédé selon l'une des revendications précédentes, **caractérisé en ce que** la couche adhésive (3) concernée ne recouvre qu'une partie de la surface du segment (1).

6. Procédé selon l'une des revendications précédentes, **caractérisé en ce que** la couche adhésive (3) concernée, après enlèvement du segment (1) et injection d'une masse de nettoyage dans le moule (2), développe une force d'adhérence à la masse de nettoyage qui est supérieure à la force d'adhérence entre la couche adhésive (3) et le moule (2).

7. Utilisation d'une couche adhésive (3) pour la mise en oeuvre du procédé selon les revendications 1 à 6, **caractérisée en ce que** la couche adhésive (3) est constituée de deux couches adhésives ayant des forces d'adhérence différentes, la couche adhésive dirigée vers le segment (1) ayant une force d'adhérence plus faible que la couche adhésive dirigée vers le moule (2), un film de séparation étant disposé entre les deux couches adhésives lequel permet la séparation des deux couches adhésives.

8. Utilisation selon la revendication 7, **caractérisée en ce que** les couches adhésives (3) sont choisies dans le groupe des colles de polymérisation, de polyaddition et de polycondensation, des colles contenant des solvants, des colles de dispersion, des colles fusibles, des colles de contact et des plastisols, et de préférence dans le groupe des colles fusibles à adhérence permanente.
